# EUROPEAN PATENT SPECIFICATION

(11) **EP 0 390 238 B1**
(45) Date of publication and mention of the grant of the patent: **13.10.1993**
(21) Application number: 90200497.7
(22) Date of filing: 02.03.1990
(51) Int. Cl.: B60R 13/07, B60J 10/08

(54) **Motor car equipped with a drip-moulding-covering, gasket-bearing finishing band**
Automobil mit einer regenrinneabdeckenden und dichtunghaltenden Zierleiste
Automobile comportant une bande décorative qui couvre la gouttière et porte un joint d'étanchéité

(30) Priority: 10.03.1989 IT 2072189 U
(43) Date of publication of application: 03.10.1990
(73) Proprietor: FIAT AUTO S.p.A., 10135 Torino (IT)
(72) Inventor: Benedetto, Carmelo, I-20123 Milan (IT); Bosotti, Giuseppe, I-22014 Nerviano, Milan (IT)
(74) Representative: Fusina, Gerolamo

(56) References cited:
- DE-A- 3 614 012
- DE-U- 8 604 027
- FR-A- 1 327 861

## Description

The present invention relates to a motor car equipped with drip-moulding-covering, gasket-bearing finishing band.

In some motor cars the channels of the drip-mouldings are generated by bending into an "U"-shape the edges of the metal sheets which constitute the roof and the uprights, and fastening a fillet, of, e.g., a chrome-plated material, for finishing purposes.

Other times, on the contrary, to the outer wall of the "U"-shaped channel a finishing band is fastened by means of rivets, which finishing band performs the task of masking the junctures between the various parts, and partially covers the same channel. Inside said band, or inside purposely provided seats relevant gaskets are installed, which have a complex structure and cooperate to eliminate the drawbacks connected with the operation of the motor car.

The first solution suffers from the drawback that the coefficient of aerodynamic resistance (Cx) of the motor car, as well as the noisiness thereof, become worse, in that a protrusion is formed, which extends outwards from the outline of the motor car and causes vortexes to be formed in surrounding air.

The second solution, although results to be favourable from the viewpoints of aerodynamics and of noisiness, involves, as said above, a certain structural and assembling complexity, with consequent intolerable additional costs.

Furthermore, both of the above said solutions result in being rather critical as regards the positioning of a ground-noise-preventing gasket.

DE-U-8604027 describes a motor car according to the preamble of claim 1.

FR-A-1327861 describes a seal assembly for a motor vehicle which covers the joint between the frame and the roof and provides a longitudinal groove as a gasket seat. This seal assembly, however, covers an internal joint between the frame and the roof, the channel,while being used to discharge rainwater, is on the inside of the door and is only intended to catch water which has leaked past the gasket.

The purpose of the present invention is to provide a solution which avoids the drawbacks and the disadvantages of the structure known from the prior art, above all as regards the ease of assemblage and the elimination of noise.

Such a purpose is achieved by providing a motor car according to claim 1.

This solution is a particularly advantageous one, in that it makes possible a ground-noise-preventing, "J"-shaped gasket to be directly positioned inside the longitudinal seat of the finishing band, which simultaneously improves the aerodynamic and noisiness characteristics of the motor car, without any major modifications having to be brought in roof and uprights structure and assembling procedure.

Characteristics and advantages of the present invention are illustrated now with better clearness in the following disclosure, wherein a preferred form of practical embodiment of the same is represented for exemplifying, non-Limitative purposes, as referred to the hereto attached schematic drawings, in which:
Figure 1 shows a partial, side, perspective view of a motor car according to the present invention; and
Figure 2 shows an enlarged sectional view according to the plane II-II of Figure 1.

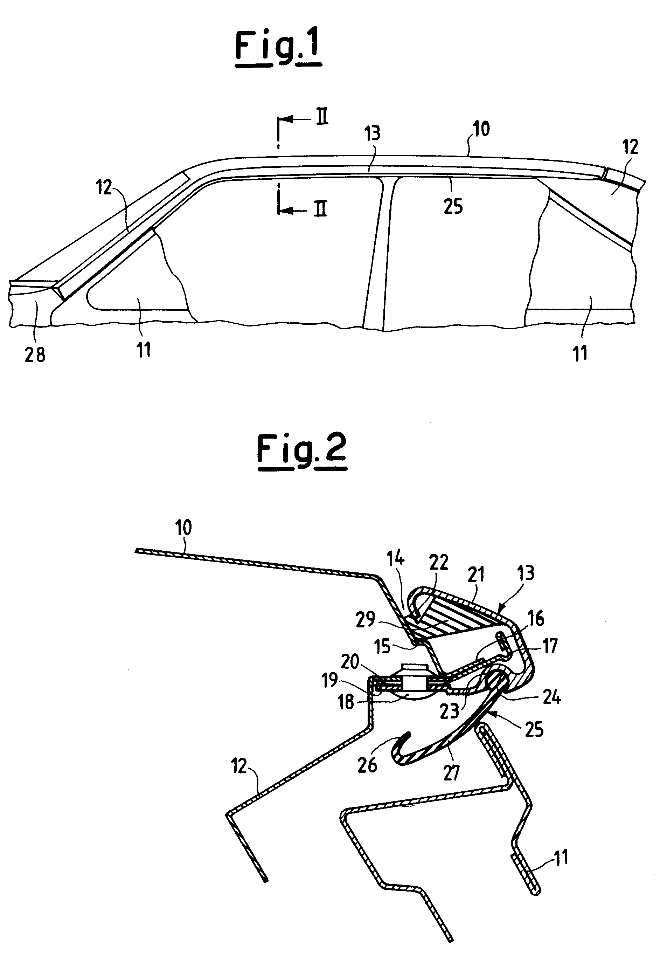

In Figure 1 a motor car is shown, which is provided with a roof 10, a front door or a rear door 11, a front upright and a rear upright 12 and a side finishing band 13 also acting as a drip-moulding-cover.

The side finishing band 13 is mounted on the outside of the vehicle, extends from about a front bonnet 28 to the nearby of the rear upright 12, and can possibly have a thinner front end portion.

Under said finishing band 13 a channel for water discharge, also said "drip-moulding", generally indicated with the reference numeral 14 is defined. It can be seen in Figure 2.

An analogous channel 14 and an analogous side finishing band 13 are of course provided in specular fashion on the other side of the motor car, not visible in Figure 1.

As it results from Figure 2, the wall of the roof 10, generally made from iron sheet, shows a longitudinal, step-shaped hollow 15 before an end edge thereof bent into a square-angle shape 16. Such a square-angle-bent end edge 16 gets coupled with a parallel end edge 17 of the upright 12, e.g., by welding, and the upright 12 supports, by means of suitable fastening means, for example rivets 18, the finishing band 13. The coupling between the upright 12 and another end portion 19 of the finishing band 13 is made easier by fastening indentations 20 extending from the same upright 12.

The finishing band 13, e.g., obtained from an extruded structural shape and having a side 21 so contoured as to match the outline of the roof, has an end portion 22 which is bent inwards towards said roof and another end portion 19 which, as mentioned above, is fastened to the upright 12. An intermediate portion 23 of said finishing band 13 is provided with a longitudinal seat 24 in the form of a contoured groove, in order to make it possible a gasket generally indicated by the reference numeral 25 to be installed.

The gasket 25 is "J"-shaped and has a free edge 26 facing said upright 12 and a back portion 27 cooperating with at least one upper portion of a door schematically shown in 11. Preferably, said "J"-shaped gasket 25 has an inclined outline, so as to line up with said finishing band 13 and said door 11, the aerodynamic characteristics of the motor car being optimized, and any ground noise being completely eliminated.

The finishing band 13, made from an extruded structural shape, preferably has its side portion 21 and its one end 22 essentially lined up and subsequently bent by means of a purposely provided operation of bending and pressing, so as to obtain a perfect matching with the end contour which one wishes to obtain, such as, e.g., the contour shown in Figure 2. In that way, the profile of the motor car as designed by the stylist is kept unchanged, and a finishing band is simultaneously accomplished, which supports a purposely provided ground-noise-preventing gasket.

Interposed between the finishing band 13, in the nearby of its bent end 22, and the wall of the roof 10, a further longitudinal, suitably contoured gasket 29 is interposed, so as to accomplish a tight sealing between the finishing band and the wall of the roof. Said further gasket 29 extends from the front bonnet 28 to the end region of the rear door 11 and can have, in the same way as of the finishing band, a thinner section.

Of course, if required, both the finishing band and the ground-noise-preventing gasket can be made in a colour equivalent to the colour of the motor car.

## Claims

1. Motor car comprising a roof (10) and uprights (12), which motor car is provided with at least one channel (14) for discharging rainwater, which channel (14) defines a drip-moulding, and with at least one finishing band (13) defining a drip-moulding-cover used in order to mask the junctures between the roof (10) and the uprights (12), wherein said roof (10) is provided with at least one longitudinal hollow (15) provided near its edge (16), with said finishing band (13) showing a side (21) contoured so as to match the outline of the roof (10) and of the uprights (12), wherein said finishing band (13) in said contoured side (21) has, in cross section, an end portion (22) which is bent inwards towards said roof (10) and another end portion (19) which is fastened to said uprights (12), and an intermediate portion (23) which is provided with a longitudinal seat (24) and a gasket (25), said finishing band (13) being mounted on the outside of the vehicle, said longitudinal seat (24) being a contoured groove having the gasket (25) mounted therein, characterised in that said gasket (25) is "J"-shaped and has a free edge (26) facing said uprights (12) and a back portion (27) cooperating with at least one upper portion of a door (11).

2. Motor car according to claim 1, characterised in that said "J"-shaped gasket (25) has an inclined contour, so as to line up with said finishing band (13) and said door (11).

3. Motor car according to claim 1, characterised in that said other end portion (19) is fastened to said uprights (12) by means of rivets (18).

4. Motor car according to claim 3, characterised in that said other end portion (19) is fastened to said uprights (12) with the interposition of fastening indentations (20), which extend from said uprights (12).

5. Motor car according to claim 1, characterised in that said finishing band (13) extends longitudinally to said motor car, along both of the sides thereof, from a front bonnet (28) to the vicinity of a rear upright (12).

6. Motor car according to claim 1, characterised in that, between said bent end (22) of said finishing band (13) and said roof outline, a further longitudinal gasket (29) is interposed , which extends from a front bonnet (28) to the vicinity of a rear door (11).

## Patentansprüche

1. Kraftwagen mit einem Dach (10) und Pfosten (12), der mit mindestens einem Kanal (14) zum Ablassen von Regenwasser versehen ist, wobei der Kanal (14) eine Regenleiste definiert und der Kraftwagen mit mindestens einem Abschlußband (13) versehen ist, das eine Regenleistenabdeckung definiert, die zum Verkleiden der Verbindungsfugen zwischen dem Dach (10) und den Pfosten (12) dient, wobei das Dach (10) mit mindestens einer längsgerichteten Hohlkehle (15) in der Nähe seiner Kante (16) versehen ist, und das Abschlußband (13) eine Seite (21) zeigt, die so konturiert ist, daß sie sich der Peripherie des Daches (10) und den Pfosten (12) anpaßt, wobei das Abschlußband (13) unter der konturierten Seite (21) einen Endabschnitt (22), der im Querschnitt nach innen zum Dach (10) hin abgebogen ist, und einen weiteren Endabschnitt (19) aufweist, der an den Pfosten (12) befestigt ist, wobei das Band einen Zwischenabschnitt (23) aufweist, der mit einem längsgerichteten Sitz (24) und einer Dichtung (25) versehen ist, wobei das Abschlußband (13) an der Außenseite des Fahrzeuges montiert und der längsgerichtete Sitz (24) eine konturierte Nut ist, in der die Dichtung (25) montiert ist,
dadurch **gekennzeichnet**, daß die Dichtung (25) J-förmig ausgebildet ist und einen freien Rand (26), der auf die Pfosten (12) gerichtet ist, sowie einen rückwärtigen Abschnitt (27) besitzt, der mit mindestens einem oberen Abschnitt einer Tür (11) zusammenwirkt.

2. Kraftwagen nach Anspruch 1, dadurch gekennzeichnet, dass die J-förmige Dichtung (25) eine schrägverlaufende Kontur besitzt, so daß sie an das Abschlußband (13) und die Tür (11) anschließt.

3. Kraftwagen nach Anspruch 1,
dadurch **gekennzeichnet**, daß der andere Endabschnitt (19) an den Pfosten (12) durch Nieten (18) befestigt ist.

4. Kraftwagen nach Anspruch 3,
dadurch **gekennzeichnet**, daß der andere Endabschnitt (19) an den Pfosten (12) unter Einfügung von Befestigungsausschnitten (20) verbunden ist, die aus den Pfosten (12) herausragen.

5. Kraftwagen nach Anspruch 1,
dadurch **gekennzeichnet**, daß sich das Abschlußband (13) in Längsrichtung zum Kraftwagen an beiden Seiten desselben von der Motorhaube (28) bis in die Nähe des hinteren Pfostens (12) erstreckt.

6. Kraftwagen nach Anspruch 1,
dadurch **gekennzeichnet**, daß zwischen dem umgebogenen Ende (22) des Abschlußbandes (13) und der Dachkontur eine weitere längsgerichtete Dichtung (29) eingefügt ist, die sich von der Motorhaube (28) bis in die Nähe der hinteren Tür (11) erstreckt.

## Revendications

1. Automobile comportant un toit (10) et des montants (12), laquelle automobile est pourvue d'au moins un canal (14) destiné à évacuer l'eau de pluie, lequel canal (14) définit une gouttière, et avec au moins une bande décorative (13) définissant un cache de gouttière utilisé afin de masquer les jonctions entre le toit (10) et les montants (12), ledit toit (10) étant pourvu d'au moins un renforcement longitudinal (15) prévu à proximité de son bord (16), avec ladite bande décorative (13) présentant un côté (21) profilé de façon à correspondre au contour du toit (10) et des montants (12), ladite bande décorative (13) dans ledit côté profilé (21) présentant en coupe une partie d'extrémité (22) qui est recourbée vers l'intérieur en direction dudit toit (10) et une autre partie d'extrémité (19) qui est fixée sur lesdits montants (12), et une partie intermédiaire (23) qui est pourvue d'un siège longitudinal (24) et d'un joint d'étanchéité (25), ladite bande décorative (13) étant montée sur l'extérieur du véhicule, ledit siège longitudinal (24) étant une rainure profilée dans laquelle est montée le joint d'étanchéité (25), caractérisé en ce que ledit joint d'étanchéité (25) est en forme de "J" et possède un bord libre (26) faisant face aux dits montants (12) et une partie arrière (27) qui coopère avec au moins une partie supérieure d'une porte (11).

2. Automobile selon la revendication 1, caractérisée en ce que ledit joint d'étanchéité en forme de "J" (25) présente un contour incliné de façon à s'aligner avec ladite bande décorative (13) et ladite porte (11).

3. Automobile selon la revendication 1, caractérisée en ce que ladite autre partie d'extrémité (19) est fixée sur les montants (12) au moyen de rivets (18).

4. Automobile selon la revendication 3, caractérisée en ce que ladite autre partie d'extrémité (19) est fixée sur les montants (12) avec interposition de stries de fixation (20) qui s'étendent depuis lesdits montants (12).

5. Automobile selon la revendication 1, caractérisée en ce que ladite bande décorative (13) s'étend longitudinalement jusqu'à ladite automobile, le long des deux côtés de celle-ci, depuis un capot avant (28) jusqu'au voisinage d'un montant arrière (12).

6. Automobile selon la revendication 1, caractérisée en ce que un autre joint d'étanchéité longitudinal (29) est interposé entre ladite extrémité recourbée (22) de ladite bande décorative (13) et ledit contour du toit et s'étend depuis un capot avant (28) avant jusqu'au voisinage d'une partie supérieure d'une porte arrière (11).
